# FASCICULE DE BREVET EUROPEEN

(11) **EP 2 181 923 B1**
(45) Date de publication et mention de la délivrance du brevet: **22.01.2014**
(21) Numéro de dépôt: 09169255.8
(22) Date de dépôt: 02.09.2009
(51) Int. Cl.: B64G 1/28

(54) **Procédé et système de désaturation des roues d'inertie d'un engin spatial**
Entsättigungsverfahren und -system für die Trägheitsräder eines Raumschiffs
Method and system for desaturating the inertia wheels in a spacecraft

(30) Priorité: 31.10.2008 FR 0806076
(43) Date de publication de la demande: 05.05.2010
(73) Titulaire: Thales, 92200 Neuilly Sur Seine (FR)
(72) Inventeur: Guyot, François, 38620 Saint Geoire en Valdaine (FR)
(74) Mandataire: Nguyen, Dominique

(56) Documents cités:
- EP-A- 0 568 209
- EP-A- 0 937 644
- JP-A- 10 167 197
- US-A- 4 010 921
- US-A- 5 312 073
- US-A- 5 354 016
- US-B1- 6 523 785

## Description

La présente invention concerne un procédé et un système de désaturation des roues d'inertie d'un engin spatial. Elle s'applique notamment au domaine des satellites ou des sondes interplanétaires devant conserver, quelle que soit leur trajectoire ou leur orbite, une orientation bien précise, appelée attitude, pour assurer, selon leur mission, la bonne orientation de leurs antennes, de leurs panneaux solaires, des instruments scientifiques placés à bord.

Un tel procédé et un tel système sont connus de EP 0 937 644, qui est considéré comme l'art antérieur le plus proche et décrit les caractéristiques du préambule de la revendication 1 et la revendication 9.

L'attitude, c'est-à-dire l'orientation angulaire, d'un engin spatial tel qu'un satellite ou une sonde sur une trajectoire prédéterminée est généralement contrôlée par des actuateurs internes tels que des roues d'inertie permettant d'appliquer un couple interne à l'engin spatial et de provoquer une rotation autour de l'un de ses axes X, Y, Z, les axes X, Y, Z formant un trièdre de référence lié à l'engin spatial. Or l'engin spatial a tendance à se dépointer sous l'action de couples perturbateurs produits par l'environnement tels que la pression solaire, des forces de frottement aérodynamiques, des couples électromagnétiques, des couples dus au gradient de gravité. II faut donc contrôler activement l'orientation angulaire de l'engin spatial et assurer une stabilité de cette orientation selon ses trois axes. Le contrôle d'attitude est assuré en permanence par une boucle d'asservissement comportant des capteurs qui mesurent l'orientation de l'engin spatial, un calculateur de bord qui traite ces mesures et établit les commandes qui sont exécutées par un ou plusieurs actuateurs pour contrebalancer les dérives et maintenir une orientation dans une direction choisie. Cependant, à chaque fois que les roues fournissent un couple interne, leur vitesse augmente jusqu'à atteindre une vitesse maximale appelée vitesse de saturation. Lorsque la vitesse maximale est atteinte, les roues d'inertie ne peuvent plus réaliser la compensation des dérives et le calculateur de bord engage alors une opération de désaturation des roues (en anglais : wheels unloading).

La désaturation des roues est généralement réalisée en utilisant des actionneurs additionnels externes appliquant, sur l'engin spatial, un couple externe choisi de façon à faire baisser la vitesse des roues jusqu'à ce que les roues retrouvent leur vitesse d'origine.

Pour réaliser la désaturation des roues à inertie, il est connu d'utiliser des magnéto-coupleurs (en anglais : magneto torquer bar) qui, par interaction avec le champ magnétique terrestre, créent un couple magnétique pour faire baisser la vitesse des roues. Ces actionneurs externes fonctionnent bien pour les engins spatiaux placés en orbite basse, LEO (en anglais : Low Earth Orbit), autour d'une planète avec magnétosphère telle que la Terre, pour des altitudes allant généralement jusqu'à 2000 km pour la Terre, car l'intensité du champ magnétique terrestre est forte près de la planète mais ils fonctionnent moins bien en moyenne à des altitudes supérieures. En outre, en orbite terrestre équatoriale, le plan de l'orbite est celui de l'équateur terrestre et l'axe du champ magnétique est quasiment orthogonal au plan de l'orbite. Aucun couple magnétique ne pouvant être créé suivant l'axe du champ magnétique, certaines dérives du satellite ne peuvent donc pas être compensées par ces actuateurs.

A haute altitude ou en orbite géostationnaire GEO (en anglais: Geosynchronous Earth Orbit), il est connu d'utiliser des tuyères (en anglais: thruster) pour réaliser la désaturation des roues à inertie. Les tuyères permettent de créer un couple externe par l'émission de jets de gaz. Cependant les tuyères présentent l'inconvénient de déplacer l'engin spatial en rotation mais aussi en translation ce qui perturbe l'orbite de l'engin spatial, crée beaucoup de vibrations et engendre des pertes de pointage. En outre, les tuyères étant généralement disposées sur l'un des côtés de l'engin spatial, il est nécessaire de faire tourner l'engin spatial en rotation pour orienter correctement les tuyères pendant l'opération de désaturation des roues d'inertie. Enfin, l'utilisation des tuyères pour la désaturation des roues entraîne une consommation de carburant supplémentaire alors que les roues d'inertie sont alimentées électriquement via l'énergie solaire captées par des panneaux solaires dont est équipé l'engin spatial.

La présente invention a pour but de remédier à ces problèmes en proposant un nouveau procédé de désaturation des roues d'inertie d'un engin spatial, dans lequel la désaturation est réalisée automatiquement, ne nécessite pas d'actuateurs externes additionnels, permet d'économiser les réserves de carburant et permet donc de simplifier et de diminuer ainsi la masse et le coût de l'engin spatial.

A cet effet, l'invention a pour objet un procédé de désaturation des roues d'inertie d'un engin spatial, l'engin spatial comportant trois axes de référence X, Y, Z, l'axe Z correspondant à une direction de pointage et l'engin spatial ayant une capacité à accumuler un moment cinétique embarqué dans les roues jusqu'à une valeur maximale de saturation, **caractérisé en ce qu**'il consiste, pour désaturer l'engin spatial selon les trois axes X, Y, Z, à renverser le sens d'accumulation du moment cinétique dans les roues par basculement automatique de l'engin spatial autour de l'axe Z, la direction de pointage restant fixe.

Avantageusement, le procédé consiste:
- à choisir une valeur de seuil Hs de déclenchement de la désaturation des roues et un vecteur moment cinétique embarqué de référence *̅H̅*̅₀,
- à mesurer périodiquement, la vitesse angulaire de chaque roue d'inertie,
- pour chaque mesure de vitesse, à calculer un vecteur moment cinétique embarqué *H̅ᵢ* et en déduire un moment cinétique accumulé Hᵢ égal à un écart en module entre le vecteur moment cinétique embarqué *H̅ ᵢ* et le vecteur moment cinétique embarqué de référence *̅H̅*̅₀,
- à comparer le moment cinétique accumulé Hᵢ à la valeur de seuil Hs,
- lorsque le moment cinétique accumulé Hᵢ est supérieur à la valeur de seuil Hs, à prendre une décision sur le déclenchement d'une manoeuvre de basculement permettant la désaturation des roues, puis à déclencher une manoeuvre automatique de basculement de l'engin spatial en rotation d'un angle prédéterminé autour de l'axe Z, la direction de pointage restant fixe.

Optionnellement, la décision sur le déclenchement de la manoeuvre de basculement permettant la désaturation des roues est prise si Hᵢ est en croissance entre deux mesures successives.

Avantageusement, la valeur de seuil Hs est inférieure à la valeur maximale de saturation.

Préférentiellement, l'angle de basculement en rotation est égal à 180°.

Préférentiellement, le déclenchement de la manoeuvre de basculement en rotation est autorisé quand l'engin spatial est dans une position prédéterminée sur sa trajectoire. Par exemple, la position prédéterminée peut correspondre au passage de l'engin spatial au-dessus d'une zone géographique terrestre de faible densité humaine, ou au passage de l'engin spatial dans une zone où il fait nuit

Avantageusement, la manoeuvre de basculement en rotation de l'engin spatial est réalisée par au moins une roue d'inertie.

L'invention concerne également un système de désaturation des roues d'inertie d'un engin spatial comportant au moins une roue d'inertie l'engin spatial ayant une capacité d'accumuler un moment cinétique embarqué dans la roue jusqu'à une valeur maximale de saturation, **caractérisé en ce qu**'il comporte des moyens pour déclencher une manoeuvre automatique de basculement de l'engin spatial en rotation d'un angle prédéterminé autour d'un axe Z correspondant à une direction de pointage, la direction de pointage restant fixe, l'angle étant choisi de façon à renverser le sens d'accumulation du moment cinétique dans les roues.

Avantageusement, le système comporte en outre au moins un capteur de vitesse monté sur la roue d'inertie, des moyens de calcul du moment cinétique embarqué accumulé par la roue d'inertie correspondant à la vitesse mesurée, des moyens de comparaison du moment cinétique de la roue à une valeur de seuil de déclenchement de la désaturation des roues préalablement choisie, des moyens de décision du déclenchement d'une manoeuvre de basculement permettant la désaturation de la roue lorsque la valeur du moment cinétique de la roue est supérieure à la valeur de seuil.

Enfin, l'invention concerne aussi un engin spatial comportant au moins une roue d'inertie et un axe Z correspondant à une direction de pointage et un système de désaturation de la roue d'inertie.

D'autres particularités et avantages de l'invention apparaîtront clairement dans la suite de la description donnée à titre d'exemple purement illustratif et non limitatif, en référence aux dessins schématiques annexés qui représentent :
- figure 1: un schéma en perspective d'un exemple d'engin spatial, selon l'invention ;
- figure 2 : une vue schématique en perspective d'un exemple d'engin spatial placé sur une orbite équatoriale autour d'une planète, selon l'invention;
- figure 3 : un schéma d'un exemple de disposition des roues d'inertie dans un engin spatial ;
- figures 4a et 4b : un exemple d'évolution, en fonction du temps, des couples perturbateurs suivant les axes X, Y, Z, et de leur impact sur le moment cinétique cumulé par les roues d'inertie pendant une période orbitale;
- figures 5a et 5b: deux schémas synoptiques montrant les principales étapes du procédé de désaturation des roues d'inertie d'un engin spatial, selon l'invention ;
- figures 6a et 6b : un exemple d'évolution, en fonction du temps, des couples perturbateurs suivant les axes X, Y, Z, avant et après le basculement en rotation de l'engin spatial, selon l'invention ;
- figures 7a et 7b : un exemple d'évolution du moment cinétique cumulé par les roues avant et après le basculement en rotation de l'engin spatial, selon l'invention ;
- figure 8a et 8b : un deuxième exemple d'application du procédé selon l'invention à la désaturation des roues d'un engin spatial dans l'espace.

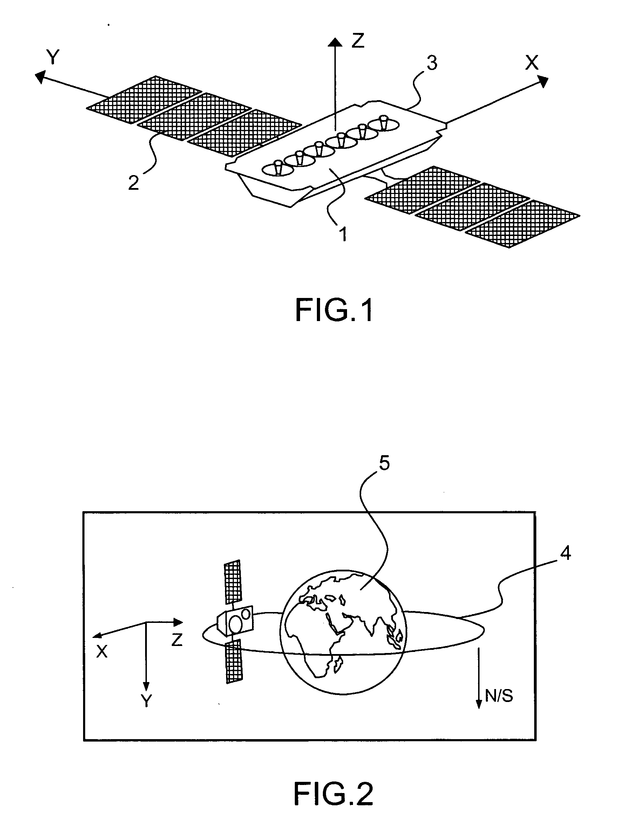

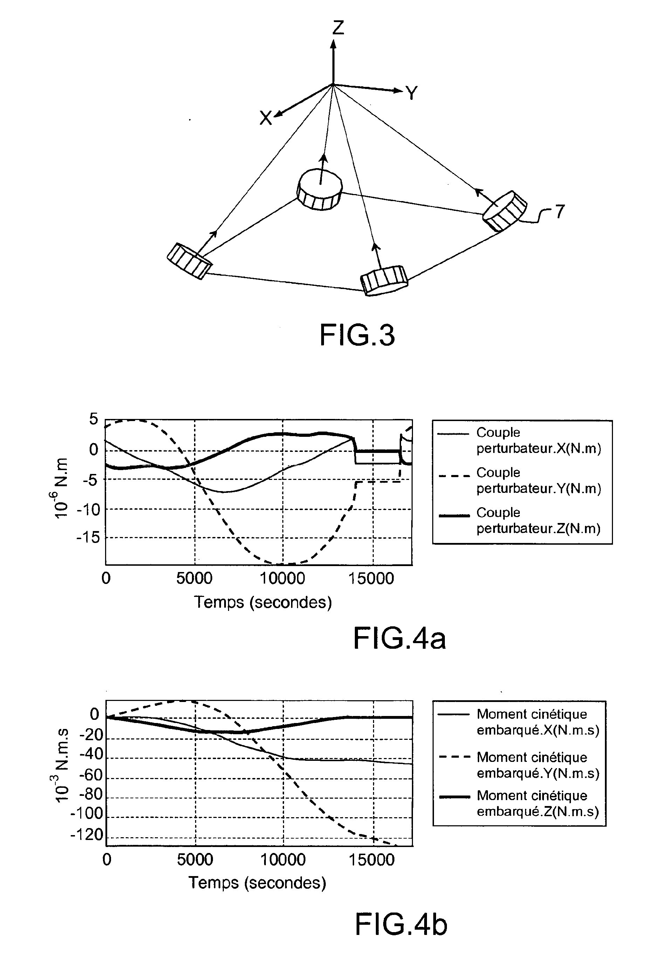

La figure 1 représente un exemple d'engin spatial, par exemple un satellite de télécommunications, comportant une plateforme 1 équipée de panneaux solaires 2 et d'une charge utile comportant des antennes d'émission et de réception 3. L'engin spatial comporte trois axes X, Y, Z formant un repère de référence lié à l'engin spatial. Sur la figure 1, l'axe X peut correspondre à une direction de vol sur une trajectoire prédéterminée tel que par exemple une orbite autour de la Terre comme représenté par exemple sur la figure 2, l'axe Y est orienté Nord/sud, l'axe de lacet Z est orthogonal au plan formé par les axes X et Y et correspond à une direction de pointage. Les panneaux solaires 2 sont orientés selon la direction de l'axe Y et les antennes 3 sont orientées selon l'axe de lacet Z, par exemple vers la Terre ou vers une étoile. L'engin spatial comporte au moins trois roues d'inertie 4, appelées aussi roues à réaction, comme représenté par exemple sur la figure 3. Les roues d'inertie sont généralement intégrées dans le corps du satellite, par exemple dans la plateforme 1. Pour réaliser un couple de réaction selon les trois axes X, Y, Z, et permettre d'assurer une stabilité de l'orientation angulaire de l'engin spatial, trois roues sont nécessaires. L'ajout d'une quatrième roue est une redondance qui est utile en cas de défaillance de l'une des roues ou pour éviter que les roues n'atteignent une vitesse nulle qui peut parfois engendrer des perturbations sur le pointage du satellite. Lors des manoeuvres réalisées pour corriger une dérive de l'attitude de l'engin spatial, les roues 4 fournissent un couple interne qui peut augmenter leur vitesse de rotation et donc leur moment cinétique cumulé.

Par ailleurs, une manoeuvre en rotation du satellite avec les roues, fait prendre temporairement de la vitesse aux roues entre le début et la fin de la manoeuvre. Pour faire tourner le satellite les roues se chargent en moment cinétique qui, suivant la loi de conservation du moment cinétique, se transfert dans le corps du satellite.

Les figures 4a et 4b montrent respectivement un exemple d'évolution, en fonction du temps, des couples perturbateurs suivant les axes X, Y, Z, et de leur impact sur le moment cinétique cumulé par les roues d'inertie 4 pendant une période orbitale. Dans cet exemple, l'engin spatial est un satellite placé sur une orbite équatoriale terrestre à moyenne altitude, entre 2000 km et 36 000 km. A ces altitudes, les principaux couples perturbateurs qui agissent sur l'attitude de l'engin spatial sont les couples dus à la pression solaire et les couples dus au gradient de gravité. Par exemple, à 8 000 km d'altitude, les couples dus aux frottements atmosphériques sont négligeables.

En outre, le couple magnétique résiduel n'a aucun impact sur le moment cinétique cumulé par les roues d'inertie car il se compense en moyenne dans le temps. Ces figures montrent que, en raison de la pression solaire, les perturbations évoluent tout au long de l'orbite en fonction de l'orientation du satellite par rapport au soleil et que les composantes du moment cinétique embarqué suivant les axes X, Y, Z, ont augmenté après un tour d'orbite. Par ailleurs, lorsque la Terre éclipse le Soleil par rapport au satellite, c'est-à-dire entre 14 000 secondes et 16 000 secondes sur les courbes représentées, il n'y a plus de pression solaire et les couples perturbateurs principalement dus au gradient de gravité, sont quasiment constants. Les changements de sens d'évolution du moment cinétique embarqué sont dus à un échange de moment cinétique entre les axes du satellite en raison de sa rotation autour de l'axe Y (Nord/Sud). Cette rotation est liée au pointage du satellite en direction de la Terre.

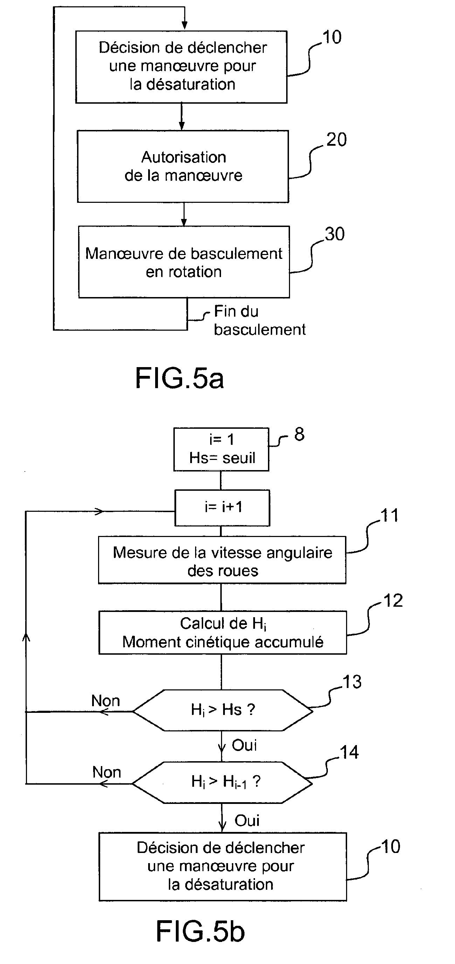

Les figures 5a et 5b représentent deux blocs diagrammes montrant les principales étapes du procédé de désaturation des roues d'inertie 4 d'un engin spatial, selon l'invention. Pour simplifier la compréhension de l'invention, le procédé est décrit en prenant l'exemple d'un engin spatial en orbite autour d'une planète telle que la Terre et ayant ses antennes pointées selon une direction de pointage correspondant à l'axe de lacet Z.

La première étape 10, consiste à prendre une décision sur le déclenchement d'une manoeuvre afin de désaturer des roues d'inertie à partir de mesures 11 des vitesses angulaires de chaque roue d'inertie, les mesures étant réalisées périodiquement. Pendant cette étape, l'axe de lacet Z est maintenu fixe. Lors d'une première itération i=1, dans une étape préliminaire 8, une valeur de seuil Hs de déclenchement de la désaturation des roues et un vecteur moment cinétique embarqué *̅H̅*̅₀ de référence sont choisies. *̅H̅*̅₀ est un vecteur à 3 dimensions et constitue une valeur souhaitée pour le moment cinétique embarqué. Suivant l'application considérée, le vecteur *̅H̅*̅₀ peut être nul ou non nul.

Lorsque l'engin spatial est un satellite en orbite autour d'une planète, les mesures de vitesse peuvent être faites par exemple à chaque orbite.

Dans ce cas, à chaque orbite, des capteurs de vitesse placés sur chaque roue d'inertie mesurent la vitesse angulaire Ω des roues. Les vitesses angulaires Ω mesurées sont transmises à un calculateur embarqué qui, à partir des mesures de vitesse Ω, à chaque itération i, calcule le vecteur moment cinétique embarqué *H̅ᵢ* et en déduit le moment cinétique accumulé Hᵢ égal à l'écart, en module, entre le vecteur moment cinétique embarqué *H̅ᵢ* et le vecteur de référence *̅H̅*̅₀. Le moment cinétique accumulé Hᵢ est obtenu préférentiellement -pour la désaturation dite suivant les trois axes du satellite-en calculant la norme d'ordre deux de la différence entre le vecteur moment cinétique embarqué *H̅ᵢ* et le vecteur de référence *̅H̅*̅₀ ou - pour une désaturation partielle suivant un seul axe de vecteur unitaire *̅u̅*̅ - en calculant le produit scalaire de la différence entre le vecteur moment cinétique embarqué *H̅ ᵢ* et le vecteur de référence *̅H̅*̅₀ avec le vecteur unitaire : (*H̅ᵢ -H̅*₀)*.u̅*. Par exemple, pour une désaturation de l'axe Y avec un vecteur de référence *̅H̅*̅₀ nul , le moment cinétique accumulé Hᵢ est égal à la composante Hy,ᵢ suivant l'axe Y, du vecteur moment cinétique embarqué *H̅ᵢ*.

Le vecteur de référence en moment cinétique *̅H̅*̅₀ est un paramètre, vecteur à 3 dimensions. Le vecteur de moment cinétique embarqué *H̅ᵢ* à trois dimensions est calculé par une somme vectorielle des moments cinétiques des roues. Le moment cinétique de chaque roue est obtenu en multipliant la vitesse angulaire de la roue par l'inertie en rotation de la roue. L'inertie I de chaque roue est une caractéristique intrinsèque de la roue. Si toutes les roues sont identiques, elles ont la même inertie. Le vecteur vitesse est un vecteur à n dimensions, n étant le nombre de roues.

La décision de déclencher la manoeuvre pour désaturer les roues est alors prise par le calculateur embarqué selon le processus suivant. La valeur Hᵢ de moment cinétique accumulé suivant au moins un axe est comparée à la valeur de seuil Hs de déclenchement de la désaturation. Le test 13, est alors réalisé pour déterminer si la valeur Hᵢ est supérieure à la valeur de seuil Hs. Optionnellement, un deuxième test 14 peut également être réalisé pour déterminer si le moment cinétique accumulé Hᵢ est en croissance Hᵢ > Hᵢ₋₁. Si le test 13, et éventuellement le test 14, est positif, alors la décision de déclencher la manoeuvre de basculement permettant la désaturation des roues est prise. Si le test 13, ou éventuellement le test 14, est négatif, le procédé est incrémenté pour l'itération suivante avec une nouvelle mesure de vitesse angulaire des roues d'inertie. La valeur de seuil Hs est une valeur prédéterminée en fonction de la plage de variation de moment cinétique embarqué autorisée. Le choix de la valeur de seuil dépend de la capacité maximum en moment cinétique des roues d'inertie, de l'orientation des roues dans l'engin spatial, du moment cinétique embarqué moyen souhaité au niveau du satellite, des marges en moment cinétique par exemple allouées aux manoeuvres et au contrôle d'attitude de l'engin spatial, et résulte d'un compromis consistant à ne pas déclencher la désaturation de manière trop fréquente mais à la déclencher suffisamment tôt pour que les roues n'atteignent pas la valeur de saturation.

La deuxième étape 20 est facultative. Elle consiste à autoriser le déclenchement de la manoeuvre pour la désaturation des roues quand la position de l'engin spatial sur son orbite arrive dans une plage de manoeuvre autorisée. Selon l'invention, la manoeuvre pour la désaturation des roues consiste à provoquer un basculement en rotation (en anglais : yaw flip) de l'engin spatial d'un angle prédéterminé autour de l'axe de lacet Z, l'axe de lacet Z restant fixe.

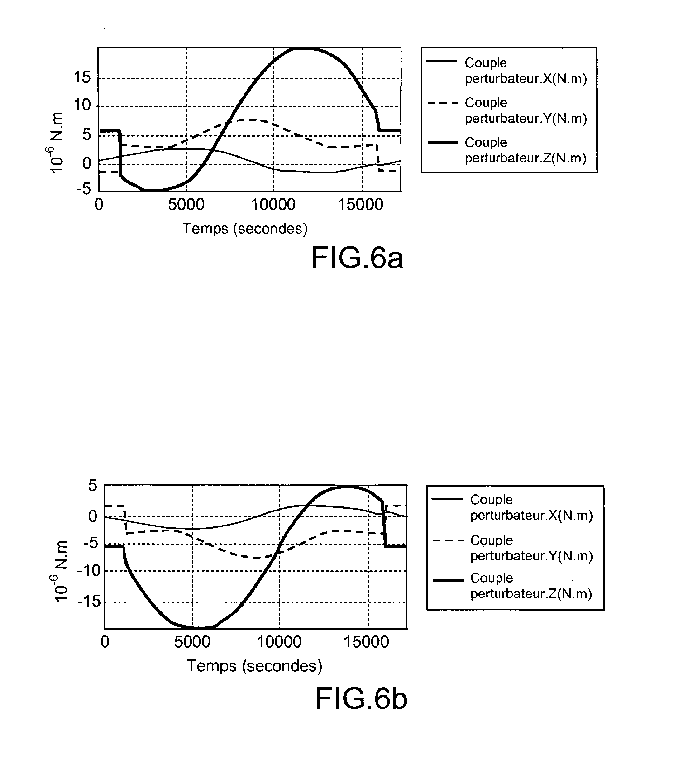

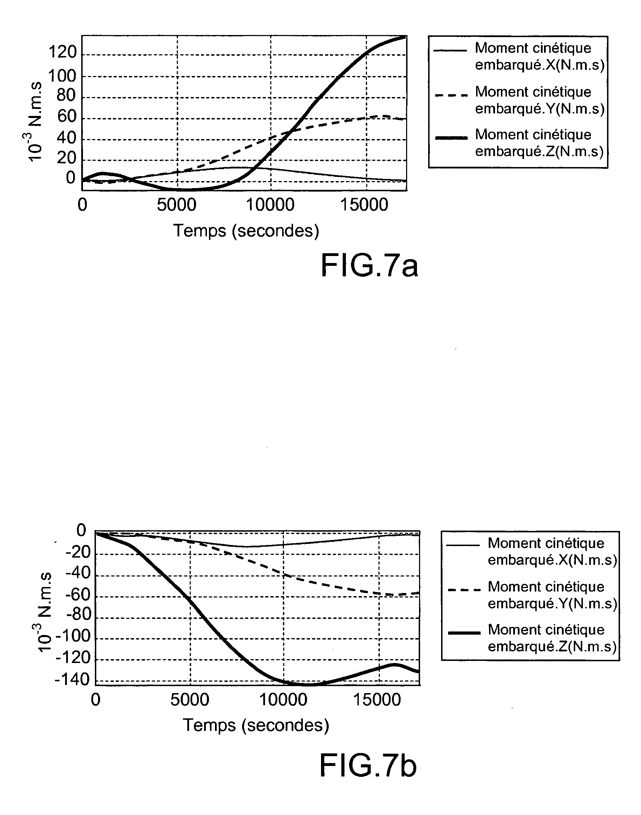

Cette rotation autour de l'axe Z, ou autour d'un axe proche de l'axe Z, permet de désaturer les roues selon les trois directions de l'espace. En particulier, la rotation autour de l'axe Z permet de résoudre complètement le problème initial de désaturation de l'axe Y correspondant à la direction Nord/Sud, parallèle au champ magnétique terrestre. II peut cependant rester un moment cinétique résiduel qui potentiellement peut grandir au cours du temps. Avantageusement, pour éliminer ce moment cinétique résiduel, le système de désaturation des roues selon l'invention peut être complété par un système de désaturation complémentaire, par exemple un système de désaturation magnétique. Lorsque l'engin spatial est en orbite autour d'une planète, l'angle de basculement en rotation est de préférence égal, ou approximativement égal, à 180°, ce qui correspond à un retournement de l'engin spatial, de façon à ce que les couples exercés par les champs parasites sur l'engin spatial avant et après le basculement en rotation soient de sens opposés et que leurs effets s'équilibrent progressivement comme représenté sur les figures 6a et 6b. Ce basculement en rotation permet donc de faire diminuer la vitesse angulaire des roues d'inertie jusqu'au retour à leur valeur initiale et le moment cinétique cumulé, au niveau de l'engin spatial, par les roues avant le basculement en rotation de l'engin spatial est progressivement compensé après le basculement en rotation comme représenté sur les figures 7a et 7b. La figure 7a, respectivement 7b, montre l'accumulation en moment cinétique par les roues sur les 3 axes du satellite pendant une période orbitale, cette accumulation étant due aux couples perturbateurs représentés sur la figure 6a respectivement 6b, avant, respectivement après, un basculement de 180° autour de l'axe Z du satellite. A 16 000 secondes, correspondant à une période orbitale, les composantes du moment cinétique embarqué de la figure 7a sont opposées et égales en module à celles de la figure 7b.

Cependant, pendant la rotation de l'engin spatial il y a un risque de dépointage des antennes et d'altération du débit de la transmission des données. Lorsque l'engin spatial est un satellite en orbite terrestre, tel que par exemple un satellite de télécommunications, la dégradation du débit de la transmission des données peut avoir des conséquences importantes. Pour limiter les conséquences, avantageusement, le basculement en rotation de l'engin spatial est autorisé quand la position de l'engin spatial sur son orbite est localisée au-dessus d'une zone géographique peu peuplée ou pendant la nuit où le besoin en débit de communication est diminué. L'axe de lacet Z de l'engin spatial reste alors maintenu fixe, l'engin spatial continuant à évoluer sur son orbite dans l'attente de passer sur une plage de manoeuvre autorisée. Quand l'engin spatial arrive dans la plage autorisée, le calculateur commande le basculement en rotation de l'engin spatial.

La troisième étape 30 concerne la réalisation de la manoeuvre de basculement en rotation. L'axe de lacet Z de l'engin spatial reste fixe et pointé vers la Terre alors que l'engin spatial tourne autour de l'axe de lacet Z, ou autour d'un axe proche de l'axe de lacet, d'un angle prédéterminé, de préférence égal à 180°, ou proche de 180°, jusqu'à ce que la manoeuvre soit terminée. La manoeuvre de basculement en rotation est avantageusement réalisée par les roues d'inertie et ne nécessite pas d'actuateurs additionnels. Lors de la manoeuvre de basculement en rotation, le moment cinétique embarqué dans les roues varie du fait du changement des vitesses des roues mais le moment cinétique total de l'ensemble constitué par le satellite et les roues reste constant dans un repère inertiel et il y a seulement un échange de moment cinétique entre les roues. Le moment cinétique embarqué dans les roues exprimé dans un repère inertiel est quasiment identique avant et après la manoeuvre de basculement.

Lorsque la manoeuvre de basculement en rotation est terminée, le procédé selon l'invention consiste à revenir à l'étape 10 pour recommencer un nouveau cycle de surveillance de la vitesse angulaire des roues d'inertie de l'engin spatial et de manoeuvres de désaturation le cas échéant. Le retournement automatique du satellite lors de chaque manoeuvre de désaturation permet aux couples externes perturbateurs, tels que la pression solaire et le gradient de gravité, de faire évoluer la vitesse moyenne des roues d'inertie dans un premier sens puis dans un deuxième sens opposé au premier sens et de permettre ainsi que la vitesse des roues d'inertie reste en-dessous du seuil de saturation.

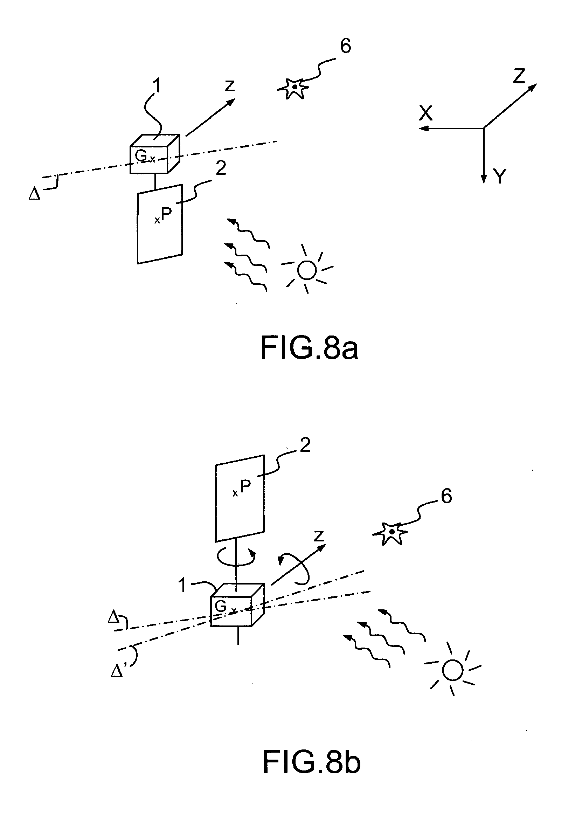

Les figures 8a et 8b montrent un deuxième exemple d'application du procédé de désaturation des roues à un engin spatial localisé dans un endroit quelconque de l'espace, par exemple un satellite en pointage inertiel. Le satellite peut par exemple pointer vers une étoile depuis une zone de l'espace située au point de Lagrange L2. Le satellite a un centre de gravité G et un point P correspondant au centre de poussée de la pression solaire et comporte une plateforme 1 et un panneau solaire 2. L'axe longitudinal du panneau solaire est par exemple l'axe Y, l'axe de pointage est l'axe Z, l'axe X étant orthogonal au plan YZ. Le satellite soumis à la pression solaire n'ayant qu'un seul panneau solaire et un centre de poussée solaire décalé par rapport au centre de gravité, est déséquilibré et accumule un moment cinétique important dans les roues suivant un axe Δ correspondant à l'axe du couple solaire. Pour désaturer les roues, le procédé selon l'invention consiste à basculer le satellite autour de l'axe de pointage Z et de renverser le sens d'accumulation du moment cinétique dans les roues. L'angle de basculement est de préférence égal à 180°. Après basculement, le moment cinétique s'accumule suivant un axe Δ' qui est généralement légèrement différent de l'axe Δ en raison du décalage du centre de poussée solaire par rapport au centre de gravité du satellite. Lorsque l'axe Δ est confondu avec l'axe Δ', il y a une désaturation complète suivant les trois axes X, Y, Z. S'il y a un décalage entre les deux axes Δ et Δ' comme représenté sur la figure 8b, la désaturation n'est pas complète suivant les trois axes X, Y, Z et il reste un moment cinétique résiduel dans le plan formé par les axes Δ et Δ', principalement suivant l'axe Y dans cet exemple. Dans ce cas, bien que ce moment cinétique résiduel soit faible comparé à l'accumulation suivant l'axe moyen, bissectrice entre Δ et Δ', il est préférable d'ajouter un système de désaturation complémentaire, par exemple de type tuyère.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de désaturation des roues d'inertie d'un engin spatial, l'engin spatial comportant trois axes de référence X, Y, Z, l'axe Z correspondant à une direction de pointage et l'engin spatial ayant une capacité d'accumuler un moment cinétique embarqué dans les roues jusqu'à une valeur maximale de saturation correspondant à une vitesse angulaire maximale, **caractérisé en ce qu'**il consiste, pour désaturer l'engin spatial selon les trois axes X, Y, Z, à renverser le sens d'accumulation du moment cinétique dans les roues par basculement automatique de l'engin spatial autour de l'axe Z, la direction de pointage restant fixe.

2. Procédé selon la revendication 1, **caractérisé en ce qu'**il consiste :
- à choisir une valeur de seuil Hs de déclenchement de la désaturation des roues et un vecteur moment cinétique embarqué de référence *̅H̅*̅₀,
- à mesurer périodiquement, la vitesse angulaire de chaque roue d'inertie,
- pour chaque mesure de vitesse, à calculer un vecteur moment cinétique embarqué *̅H̅*̅*ᵢ* et en déduire un moment cinétique accumulé Hᵢ égal à un écart, en module, entre le vecteur moment cinétique embarqué *H̅ᵢ* et le vecteur moment cinétique embarqué de référence *̅H̅*̅₀,
- à comparer le moment cinétique accumulé Hᵢ à la valeur de seuil Hs,
- lorsque le moment cinétique accumulé Hᵢ est supérieur à la valeur de seuil Hs , à prendre une décision (10) sur le déclenchement d'une manoeuvre de basculement permettant la désaturation des roues, puis à déclencher une manoeuvre automatique (30) de basculement de l'engin spatial en rotation d'un angle prédéterminé autour de l'axe Z, la direction de pointage restant fixe.

3. Procédé selon la revendication 2, **caractérisé en ce que** la décision (10) sur le déclenchement de la manoeuvre de basculement est prise si Hᵢ est en croissance entre deux mesures successives.

4. Procédé selon la revendication 2, **caractérisé en ce que** la valeur de seuil Hs est inférieure à la valeur maximale de saturation des roues d'inertie.

5. Procédé selon l'une des revendications 1 ou 2, **caractérisé en ce qu'**il consiste à basculer l'engin spatial d'un angle égal à 180° autour de l'axe Z.

6. Procédé selon la revendication 2, **caractérisé en ce que** le déclenchement de la manoeuvre (30) de basculement en rotation est autorisé dans une étape préalable d'autorisation de la manoeuvre de basculement permettant la désaturation (20) quand l'engin spatial est dans une position prédéterminée sur une trajectoire.

7. Procédé selon la revendication 6, **caractérisé en ce que** la position prédéterminée correspond au passage de l'engin spatial au-dessus d'une zone géographique terrestre de faible densité humaine ou au passage de l'engin spatial dans une zone où il fait nuit.

8. Procédé selon la revendication 6, **caractérisé en ce que** la manoeuvre de basculement (30) en rotation de l'engin spatial est réalisée par au moins une roue d'inertie.

9. Système de désaturation des roues d'inertie d'un engin spatial comportant au moins une roue d'inertie, l'engin spatial ayant une capacité d'accumuler un moment cinétique embarqué dans la roue jusqu'à une valeur maximale de saturation, **caractérisé en ce qu'**il comporte des moyens pour déclencher une manoeuvre automatique de basculement de l'engin spatial en rotation d'un angle prédéterminé autour d'un axe Z correspondant à une direction de pointage, la direction de pointage restant fixe, l'angle étant choisi de façon à renverser le sens d'accumulation du moment cinétique dans les roues.

10. Système de désaturation selon la revendication 9, **caractérisé en ce qu'**il comporte en outre au moins un capteur de vitesse monté sur la roue d'inertie, des moyens de calcul du moment cinétique Hᵢ accumulé par la roue d'inertie correspondant à la vitesse mesurée, des moyens de comparaison du moment cinétique accumulé par la roue à une valeur de seuil Hs de déclenchement de la désaturation des roues préalablement choisie, des moyens de décision du déclenchement d'une manoeuvre de basculement de l'engin spatial lorsque la valeur du moment cinétique accumulé par la roue est supérieure à la valeur de seuil.

11. Engin spatial comportant au moins une roue d'inertie et un axe Z correspondant à une direction de pointage, **caractérisé en ce qu'**il comporte un système de désaturation de la roue d'inertie selon la revendication 9.

## Patentansprüche

1. Verfahren zum Entsättigen von Trägheitsrädern eines Raumfahrzeugs, wobei das Raumfahrzeug drei Referenzachsen X, Y, Z umfasst, wobei die Z-Achse einer Zeigerichtung entspricht und das Raumfahrzeug in den Rädern enthaltenes kinetisches Moment bis zu einem maximalen Sättigungswert akkumulieren kann, der einer maximalen Winkelgeschwindigkeit entspricht, **dadurch gekennzeichnet, dass** es zum Entsättigen des Raumfahrzeugs entlang der drei Achsen X, Y, Z das Umkehren der Akkumulationsrichtung des kinetischen Moments in den Rädern durch automatisches Kippen des Raumfahrzeugs um die Z-Achse beinhaltet, wobei die Zeigerichtung fest bleibt.

2. Verfahren nach Anspruch 1, **dadurch gekennzeichnet, dass** es Folgendes beinhaltet:
- Wählen eines Schwellenwertes HS zum Auslösen der Entsättigung der Räder und eines eingeschlossenen kinetischen Momentvektors mit Referenz *̅H̅*̅₀;
- periodisches Messen der Winkelgeschwindigkeit jedes Trägheitsrades;
- Berechnen, für jede Geschwindigkeitsmessung, eines eingeschlossenen kinetischen Momentvektors *̅H̅*̅ᵢ und davon Ableiten eines akkumulierten kinetischen Moments Hᵢ gleich einer Differenz, in Modul, zwischen dem eingeschlossenen kinetischen Momentvektor *̅H̅*̅ᵢ und dem eingeschlossenen kinetischen Momentvektor mit Referenz *̅H̅*̅₀;
- Vergleichen des akkumulierten kinetischen Moments Hᵢ mit dem Schwellenwert Hs;
- Treffen einer Entscheidung (10), wenn das akkumulierte kinetische Moment Hᵢ größer ist als der Schwellenwert Hs, zum Auslösen eines Kippmanövers, das die Entsättigung der Räder zulässt, dann Auslösen eines automatischen Manövers (30) zum rotationalen Kippen des Raumfahrzeugs um einen vorbestimmten Winkel um die Z-Achse, wobei die Zeigerichtung fest bleibt.

3. Verfahren nach Anspruch 2, **dadurch gekennzeichnet, dass** die Entscheidung (10) zum Auslösen des Kippmanövers dann getroffen wird, wenn Hᵢ zwischen zwei aufeinander folgenden Messungen zunimmt.

4. Verfahren nach Anspruch 2, **dadurch gekennzeichnet, dass** der Schwellenwert Hs kleiner ist als der maximale Sättigungswert der Trägheitsräder.

5. Verfahren nach Anspruch 1 oder 2, **dadurch gekennzeichnet, dass** es das Kippen des Raumfahrzeugs um die Z-Achse um einen Winkel von gleich 180° beinhaltet.

6. Verfahren nach Anspruch 2, **dadurch gekennzeichnet, dass** das Auslösen des Manövers (30) zum rotationalen Kippen in einem vorherigen Schritt des Autorisierens des Kippmanövers autorisiert wird, das die Entsättigung (20) zulässt, wenn das Raumfahrzeug in einer vorbestimmten Position auf einer Trajektorie ist.

7. Verfahren nach Anspruch 6, **dadurch gekennzeichnet, dass** die vorbestimmte Position der Passage des Raumfahrzeugs über einer terrestrischen geografischen Zone mit geringer menschlicher Bevölkerungsdichte oder der Passage des Raumfahrzeugs in einer nächtlichen Zone entspricht.

8. Verfahren nach Anspruch 6, **dadurch gekennzeichnet, dass** das rotationale Kippmanöver (30) des Raumfahrzeugs durch wenigstens ein Trägheitsrad ausgeführt wird.

9. System zum Entsättigen von Trägheitsrädern eines Raumfahrzeugs, das wenigstens ein Trägheitsrad umfasst, wobei das Raumfahrzeug ein in dem Rad enthaltenes kinetisches Moment bis zu einem maximalen Sättigungswert akkumulieren kann, **dadurch gekennzeichnet, dass** es Mittel zum Auslösen eines automatischen Manövers zum rotationalen Kippen des Raumfahrzeugs um einen vorbestimmten Winkel um eine Z-Achse entsprechend einer Zeigerichtung umfasst, wobei die Zeigerichtung fest bleibt, wobei der Winkel so gewählt wird, dass die Akkumulationsrichtung des kinetischen Moments in den Rädern umgekehrt wird.

10. Entsättigungssystem nach Anspruch 9, **dadurch gekennzeichnet, dass** es ferner Folgendes umfasst: wenigstens einen an dem Trägheitsrad montierten Geschwindigkeitssensor, Mittel zum Berechnen des von dem Trägheitsrad akkumulierten kinetischen Moments Hᵢ entsprechend der gemessenen Geschwindigkeit, Mittel zum Vergleichen des von dem Rad akkumulierten kinetischen Moments mit einem Schwellenwert Hs zum Auslösen der Entsättigung der zuvor gewählten Räder, Mittel zum Entscheiden des Auslösens eines Manövers zum Kippen des Raumfahrzeugs, wenn der Wert des vom Rad akkumulierten kinetischen Moments größer als der Schwellenwert ist.

11. Raumfahrzeug, das wenigstens ein Trägheitsrad und eine Z-Achse umfasst, die einer Zeigerichtung entspricht, **dadurch gekennzeichnet, dass** es ein System zum Entsättigen des Trägheitsrades nach Anspruch 9 umfasst.

## Claims

1. A method for unloading the inertia wheels of a spacecraft, said spacecraft comprising three axes of reference X, Y, Z, with the Z axis corresponding to a pointing direction and the spacecraft being able to accumulate a kinetic moment included in said wheels up to a maximum loading value that corresponds to a maximum angular speed, **characterised in that** it comprises, for unloading the spacecraft along the three axes X, Y, Z, reversing the direction of accumulation of the kinetic moment in the wheels by automatically tilting the spacecraft about the Z axis, with the pointing direction remaining fixed.

2. The method according to claim 1, **characterised in that** it comprises:
- selecting a threshold value Hs for triggering the unloading of the wheels and an included reference kinetic moment vector *H̅*₀;
- periodically measuring the angular speed of each inertia wheel;
- calculating, for each speed measurement, an included kinetic moment vector *H̅*ᵢ and deducing therefrom an accumulated kinetic moment Hᵢ equal to a difference, in modulus, between the included kinetic moment vector *H̅ᵢ* and the included reference kinetic moment vector *H̅*₀;
- comparing the accumulated kinetic moment Hᵢ with the threshold value Hs;
- making a decision (10), when the accumulated kinetic moment Hᵢ is greater than the threshold value Hs, with regard to the triggering of a tilting manoeuvre allowing the unloading of the wheels, then triggering an automatic manoeuvre (30) for the rotational tilt of the spacecraft by a predetermined angle about the Z axis, with the pointing direction remaining fixed.

3. The method according to claim 2, **characterised in that** said decision (10) with regard to the triggering of the tilting manoeuvre is taken if Hᵢ increases between two successive measurements.

4. The method according to claim 2, **characterised in that** said threshold value Hs is below the maximum unloading value of the inertia wheels.

5. The method according to claim 1 or 2, **characterised in that** it comprises tilting the spacecraft about the Z axis by an angle that is equal to 180°.

6. The method according to claim 2, **characterised in that** the triggering of the rotational tilting manoeuvre (30) is authorised in a prior step of authorising the tilting manoeuvre allowing the unloading (20) when said spacecraft is in a predetermined position on a trajectory.

7. The method according to claim 6, **characterised in that** the predetermined position corresponds to the passage of the spacecraft above a terrestrial geographical zone where human population density is low or to the passage of said spacecraft in a night-time zone.

8. The method according to claim 6, **characterised in that** the manoeuvre (30) for the rotational tilt of the spacecraft is realised by at least one inertia wheel.

9. A system for unloading the inertia wheels of a spacecraft comprising at least one inertia wheel, said spacecraft being able to accumulate a kinetic moment included in the wheel up to a maximum unloading value, **characterised in that** it comprises means for triggering an automatic manoeuvre for the rotational tilt of said spacecraft by a predetermined angle about an axis Z corresponding to a pointing direction, with said pointing direction remaining fixed, said angle being selected so as to reverse the direction of accumulation of the kinetic moment in the wheels.

10. The unloading system according to claim 9, **characterised in that** it further comprises at least one speed sensor mounted on the inertia wheel, means for calculating the kinetic moment Hᵢ accumulated by the inertia wheel corresponding to the measured speed, means for comparing the kinetic moment accumulated by the wheel to a threshold value Hs for triggering the unloading of the previously selected wheels, means for deciding upon the triggering of a manoeuvre for tilting the spacecraft when the value of the kinetic moment accumulated by the wheel is greater than the threshold value.

11. A spacecraft comprising at least one inertia wheel and an axis Z corresponding to a pointing direction, **characterised in that** it comprises a system for unloading the inertia wheel according to claim 9.
